# EUROPÄISCHE PATENTANMELDUNG

(11) **EP 4 684 631 A1**
(43) Veröffentlichungstag der Anmeldung: **28.01.2026**
(21) Anmeldenummer: 25184401.5
(22) Anmeldetag: 23.06.2025
(51) Int. Cl.: A01F 15/04, A01F 15/08, A01F 15/10

(54) **KOLBENPRESSE**

(30) Priorität: 26.07.2024 DE 102024121329
(71) Anmelder: Usines CLAAS France S.A.S, 57140 St. Rémy / Woippy (FR)
(72) Erfinder: Arnould, Cyrille, 57645 Montoy-Flanville (FR)
(74) Vertreter: CLAAS Gruppe

(57) **Zusammenfassung**

Eine Kolbenpresse (2) umfasst einen in einem Presskanal (7) zwischen Endlagen beweglich angeordneten Presskolben (8), einen Zuführkanal (12), ein Raffergetriebe (13) und einen Raffer (6). Der Raffer (6) ist über einen ersten Getriebeausgang (24) des Raffergetriebes (13) angetrieben in dem Zuführkanal (12) bewegbar, um in einem ersten Betriebsmodus eine Sammelhubbewegung, die Erntegut in dem Zuführkanal (12) komprimiert, und in einem zweiten Betriebsmodus eine Füllhubbewegung, die das Erntegut aus dem Zuführkanal (12) in den Presskanal (7) verlagert, auszuführen. Das Raffergetriebe (13) weist einen zweiten Getriebeausgang (30) auf und ist umschaltbar, um in einem der Betriebszustände nur den ersten Ausgang (24) anzutreiben, und in einem anderen der Betriebszustände Antriebsleistung auf beide Ausgänge (24, 30) zu verteilen.

## Beschreibung

Die vorliegende Erfindung betrifft eine Kolbenpresse nach dem des Anspruchs 1. Eine solche Kolbenpresse ist aus EP 1 284 594 B1 bekannt.

Diese herkömmliche Kolbenpresse hat einen Zuführkanal, dem an einem Einlassende von einer Pickup ein gesammeltes Erntegut zugeführt wird. Ein Raffer greift durch Schlitze in einer Seitenwand des Zuführkanals in dessen Innenraum ein, um das zugeführte Erntegut in einer Sammelhubbewegung zu einem ein Auslassende zu verschieben und dort zu komprimieren. Wenn eine ausreichende Menge Erntegut am Auslassende des Zuführkanals versammelt ist, führt der Raffer eine Füllhubbewegung aus, durch die das Erntegut in einen Presskanal verschoben wird, in dem es von einem hin und hier beweglichen Presskolben zu einem Ballen geformt und der Ballen nach Erreichen einer vorgegebenen Größe verschnürt und ausgegeben wird.

Der Raffer ist an einen ersten Ende eines zweiarmigen Hebels montiert, dessen Angelpunkt um eine ortsfeste Achse drehangetriebenen Kurbel auf einer Kreisbahn bewegt wird. Ein zweites Ende des Hebels ist über eine Steuerstange gelenkig mit einem Steuerarm verbunden, der wiederum um eine ortsfeste Achse schwenkbeweglich ist und im Laufe einer Sammelhubbewegung eine Periode seiner Schwenkbewegung ausführt. Für eine Füllhubbewegung muss der Steuerarm an einem Endanschlag seines Bewegungsbereiches fixiert sein. Damit dieser Endanschlag nach jeder Sammelhubbewegung erreicht wird, ist eine Rückstellfeder vorgesehen, die den Steuerarm in Richtung des Endanschlags beaufschlagt. Diese Feder unterstützt zwar die Bewegung des Steuerarms während eines Teils der Füllhubbewegung, doch muss dafür während eines vorhergehenden Teils der Bewegung an der Feder Arbeit geleistet werden. Die Notwendigkeit, die Feder bei jeder Sammelhubbewegung zu spannen, lässt das benötigte Antriebsdrehmoment im Laufe einer Sammelhubbewegung stark schwanken und belastet so einen Antriebsmotor und den von dort zum Raffer verlaufenden Antriebsstrang. Eine Blockade der Feder kann dazu führen, dass der Endanschlag nicht erreicht wird und ein Umschalten auf die Füllhubbewegung nicht möglich ist.

Eine Aufgabe der Erfindung ist daher, eine Ballenpresse zu schaffen, bei der die oben erwähnten Nachteile behoben oder zumindest gelindert sind.

Die Aufgabe wird gelöst, indem bei einer Kolbenpresse, welche einen in einem Presskanal zwischen Endlagen beweglich angeordneten Presskolben, einen Zuführkanal, ein Raffergetriebe und einen Raffer umfasst, welcher, über einen ersten Getriebeausgang des Raffergetriebes angetrieben in dem Zuführkanal bewegbar ist, um in einem ersten Betriebsmodus eine Sammelhubbewegung, die Erntegut in dem Zuführkanal komprimiert, und in einem zweiten Betriebsmodus eine Füllhubbewegung, die das Erntegut aus dem Zuführkanal in den Presskanal verlagert, auszuführen, das Raffergetriebe einen zweiten Getriebeausgang aufweist und umschaltbar ist, um in einem der Betriebszustände nur den ersten Ausgang anzutreiben, und in einem anderen der Betriebszustände Antriebsleistung auf beide Ausgänge zu verteilen.

Vorzugsweise ist der eine Betriebszustand, in dem nur der erste Ausgang angetrieben ist, der oben definierte erste Betriebszustand, und der andere Betriebszustand, in dem die Antriebsleistung verteilt wird, ist der zweite Betriebszustand.

Der zweite Ausgang kann in dem einen Betriebszustand von einer Antriebswelle des Raffergetriebes entkoppelt und im zweiten mit ihr verbunden sein. Der erste Ausgang kann hingegen dauerhaft mit der Antriebswelle verbunden sein.

Um eine wahlweise Kopplung und Entkopplung zu ermöglichen, kann das Raffergetriebe ein Zahnradpaar mit einem antriebsseitigen und einem abtriebsseitigen Zahnrad umfassen, die zum Antreiben des zweiten Ausgangs zusammenwirken, wobei eine Verzahnung des abtriebsseitigen Zahnrads auf einem Teil von dessen Umfang eine Lücke aufweist, durch den sich die Zähne des antriebsseitigen Zahnrads in wenigstens einer ersten Phase des einen Betriebszustands, in der sich das abtriebsseitige Zahnrad in einer Ruhestellung befindet, im Leerlauf, d.h. ohne Formschluss, hindurchbewegbar sind.

Um das abtriebsseitige Zahnrad aus der Ruhestellung zu entfernen und einen Kraftschluss zum antriebsseitigen Zahnrad herzustellen, können das antriebsseitige und das abtriebsseitige Zahnrad jeweils mit einem Bewegeranschlag rotatorisch gekoppelt sein, wobei das abtriebsseitige Zahnrad durch Aneinanderstoßen der Bewegeranschläge aus der Ruhestellung in eine Stellung drehbar ist, in der die Zähne des antriebsseitigen Zahnrads in die Verzahnung des abtriebsseitigen Zahnrads eingreifen.

In analoger Weise können zum Anhalten des abtriebsseitigen Zahnrads in der Ruhestellung das antriebsseitige und das abtriebsseitige Zahnrad jeweils mit einem Stopperanschlag rotatorisch gekoppelt sein, wobei das abtriebsseitige Zahnrad durch Aneinanderstoßen der Stopperanschläge in einer Stellung stoppbar ist, in der die Zähne des antriebsseitigen Zahnrads in die Lücke des abtriebsseitigen Zahnrads eingreifen.

Auf jede Füllhubbewegung sollten eine, vorzugsweise mehrere Sammelhubbewegungen kommen. Damit der Bewegeranschlag des antriebsseitigen Zahnrads nicht bei jeder Umdrehung des letzteren das abtriebsseitige Zahnrad in Drehung versetzt und dadurch die Füllhubbewegung auslöst, kann der Bewegeranschlag des antriebsseitigen Zahnrads an das antriebsseitige Zahnrad über ein Untersetzungsgetriebe gekoppelt sein.

In einer kompakten Bauform umfasst das Untersetzungsgetriebe einen Ring, der exzentrisch zu einer Achse des antriebsseitigen Zahnrads angeordnet ist, und eine Innenfläche des Rings steht mit einer an das antriebsseitige Zahnrad gekoppelten und um die Achse zentrierten Außenfläche in Kontakt. Die Innen- und Außenfläche könnten als Reibflächen ausgebildet sein. Um Schlupf zu verhindern, umfassen sie jedoch vorzugsweise ein Zahnkranz und ein in den Zahnkranz eingreifendes Ritzel.

Mit Hilfe des Untersetzungsgetriebes ist ein festes Zahlenverhältnis zwischen Sammel- und Füllhubbewegungen realisierbar. Da jedoch die Menge des in jeder Sammelhubbewegung erfassten Ernteguts variabel ist, sollte auch die Zahl der Sammelhubbewegungen, auf die jeweils eine Füllhubbewegung folgt, nach Bedarf veränderbar sein. Daher ist vorzugsweise eine Kupplung vorgesehen, durch die der zweite Getriebeausgang von dem abtriebsseitigen Zahnrad entkoppelbar ist. Insbesondere kann der eine Betriebszustand in eine erste und eine zweite Phase unterteilt sein, wobei die Kupplung in der zweiten Phase den zweiten Getriebeausgang abkoppelt. Während somit in der ersten Phase das abtriebsseitige Zahnrad in der Ruhestellung bleibt, der Bewegeranschlag aber mit dem antriebsseitigen Zahnrad rotiert und nach einer festen Anzahl von Umdrehungen des antriebsseitigen Zahnrads eine Umdrehung des abtriebsseitigen Zahnrads auslöst, kann durch Öffnen der Kupplung verhindert werden dass diese Umdrehung auf den zweiten Getriebeausgang wirkt. Das antriebsseitige Zahnrad vollführt so nach jeder Füllhubbewegung zunächst eine feste Zahl von Umdrehungen, vorzugsweise genau eine, in der das abtriebsseitige Zahnrad in der Ruhestellung verbleibt; anschließend kann durch Öffnen der Kupplung eine beliebige Zahl von Umdrehungen des antriebsseitigen Zahnrades angehängt werden, bei denen der zweite Getriebeausgang unbewegt bleibt, bis eine für eine Füllhubbewegung ausreichende Menge Erntegut im Zufuhrkanal angesammelt ist.

Die Kupplung kann insbesondere als Klauenkupplung ausgebildet sein.

Die Klauen einer Klauenkupplung erlauben deren Schließen generell nur in einer begrenzten Zahl von Orientierungen der beiden Kupplungsbacken zueinander. Vorzugsweise sind die ineinandergreifenden Klauen beider Backen so geformt, dass sie das Schließen nur in einer einzigen relativen Orientierung erlauben; so kann eine fehlerhafte Phasenlage der beiden Getriebeausgänge zueinander, die dazu führen würde, dass der Raffer im zweiten Betriebsmodus eine von der Füllhubbewegung abweichende Bewegung ausführt, ausgeschlossen werden.

Der Raffer kann durch einen Hebel angetrieben sein, der an einem ersten Ende den Raffer trägt, und der an einem zweiten Ende an den zweiten Getriebeausgang und an einem zentralen Punkt zwischen dem ersten und dem zweiten Ende an den ersten Getriebeausgang gekoppelt ist.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: ein Gespann aus einem Traktor und einer Ballenpresse in einer schematischen Seitenansicht;
- Fig. 2: einen Raffer und dessen Getriebe an einem Zuführkanal der Ballenpresse;
- Fig. 3: eine Detailansicht des Raffergetriebes;
- Fig. 4: zwei Zahnräder des Raffergetriebes und einen Mechanismus zu ihrer Kopplung und Entkopplung; und
- Fig. 5: einen Backen einer in dem Raffergetriebe verwendbaren Klauenkupplung.

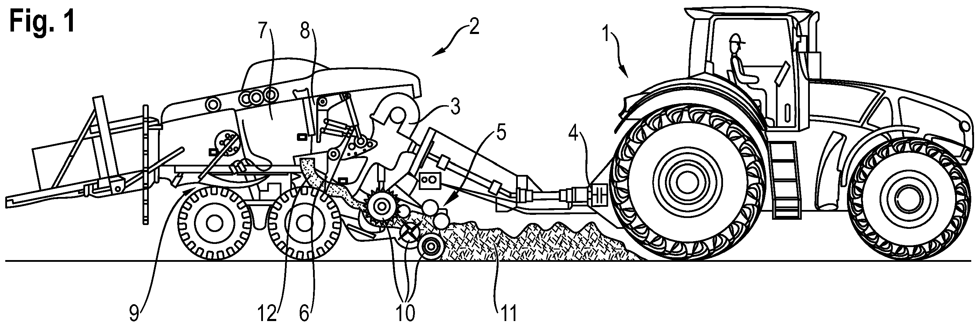

Fig. 1 zeigt einen Traktor 1 und eine daran angehängte Kolbenpresse 2. Ein Verteilergetriebe 3 der Kolbenpresse verteilt über eine Zapfwelle 4 vom Traktor 1 aus zugeführtes Antriebsmoment an eine Pickup 5, einen Raffer 6, einen in einem in Längsrichtung der Kolbenpresse 2 nach hinten leicht abschüssigen Presskanal 7 beweglichen Presskolben 8 und einen Knotermechanismus 9. Die Pickup 5 umfasst in an sich bekannter Weise mehrere drehangetriebene Walzen 10, die Erntegut 11 auf einer landwirtschaftlichen Nutzfläche zusammenschieben, anheben und in einem Zuführkanal 12 einspeisen.

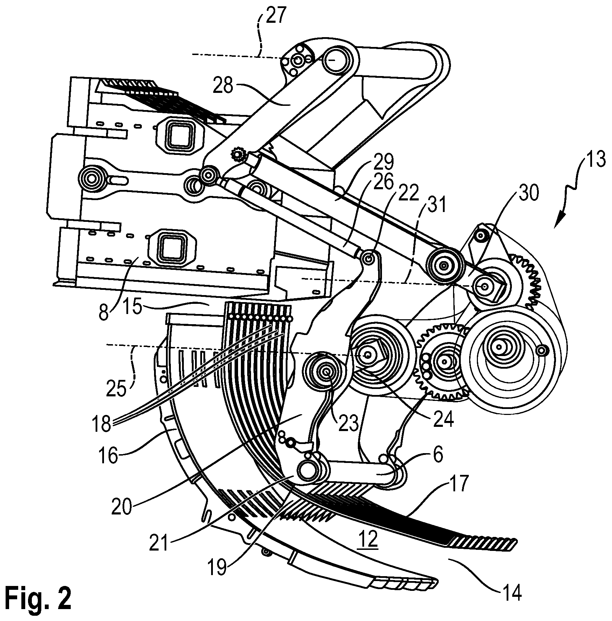

Fig. 2 zeigt detaillierter den Zuführkanal 12, den Raffer 6 und ein Raffergetriebe 13, das einen Teil des Verteilergetriebes 3 bildet. Zwischen einem der Pickup 5 zugewandten Einlassende 14 und einem dem in den Presskanal 7 mündenden Auslassende 15 des Zuführkanals 12 erstrecken sich gekrümmte Wände 16, 17. Die Wand 17 hat eine große Zahl von parallelen Schlitzen, durch die jeweils Spitzen 19 des Raffers 6 in den Zuführkanal 12 eingreifen.

Der Raffer 6 ist befestigt an einem ersten Ende 21 eines Hebels 20. Ein ungefähr mittig zwischen dem ersten Ende 21 und einem zweiten Ende 22 gelegener Angelpunkt 23 des Hebels 20 wird durch einen ersten Kurbelarm 24 des Raffergetriebes 13 zu einer Bewegung auf einer Kreisbahn um eine Achse 25 angetrieben. Das zweite Ende 22 ist über eine beidendig gelenkig verbundene Stange 26, einen um eine Achse 27 schwenkbeweglichen Arm 28 und eine weitere gelenkig verbundene Stange 29 mit einem zweiten Kurbelarm 30 des Raffergetriebes 13 verbunden.

Wenn dieser Kurbelarm 30 um eine Achse 31 rotiert, treibt einer eine Pendelschwingung des Arms 28 um die Achse 27 an und erzwingt dadurch eine Bewegung des zweiten Endes 22, die im Zusammenwirken mit der Umlaufbewegung des Angelpunkts 23 um die Achse 25 den Raffer 6 auf einer Füllhubbewegung führt. Steht der Kurbelarm 30 hingegen in der in Fig. 2 gezeigten Stellung still, dann bewirkt die Umlaufbewegung des Angelpunkts 23 um die Achse 25 eine Sammelhubbewegung des Raffers 6.

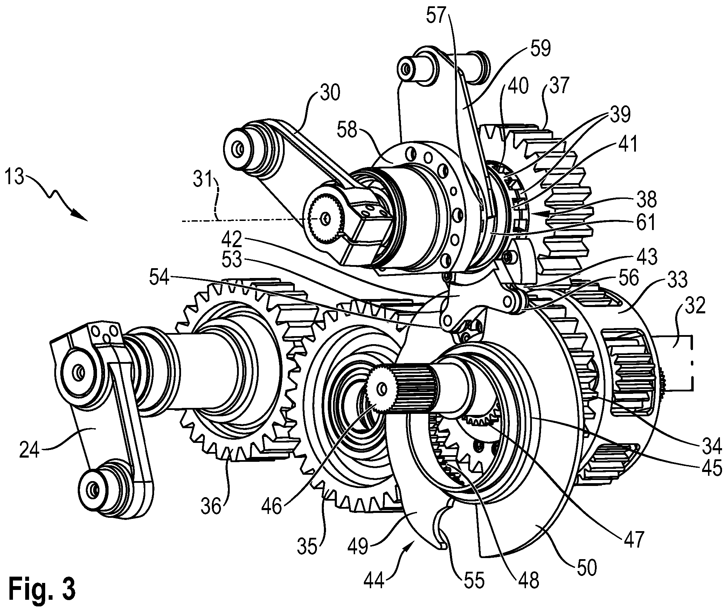

Fig.3 zeigt das Raffergetriebe 13 aus einer ähnlichen Perspektive wie Fig. 2. Eine über nicht gezeigte weitere Komponenten des Verteilergetriebes 3 an die Zapfwelle 4 gekoppelte Antriebswelle 32 treibt, über ein Planetengetriebe 33 untersetzt, ein antriebsseitiges Zahnrad 34. Dessen Drehung überträgt sich über ein Zwischenrad 35 auf ein erstes abtriebsseitiges Zahnrad 36 und auf den mit diesem starr verbundenen ersten Kurbelarm 24. Der erste Kurbelarm 24 bildet so einen ersten Ausgang, über den das Raffergetriebe 13 am Raffer 6 Arbeit leistet.

Ein zweites abtriebsseitiges Zahnrad 37 ist benachbart zum antriebsseitigen Zahnrad 34 angeordnet und um die Achse 31 drehbar. Eine Klauenkupplung 38 ist an der Achse 31 angeordnet, um eine drehmomentschlüssige Verbindung zum zweiten Kurbelarm 30 wahlweise öffnen und schließen zu können. Fig. 3 zeigt die Klauenkupplung 38 in offener Stellung, mit voneinander axial beabstandeten Klauen 39 ihrer beiden Backen 40, 41.

Ein Nocken 42 und ein Bauteil mit einer konkaven Außenkontur 43 sind drehfest mit dem abtriebsseitigen Zahnrad 37 verbunden. In der Perspektive der Fig. 3 verdecken sie eine Lücke in der Verzahnung des Zahnrads 37.

Das antriebsseitige Zahnrad 34 ist in Fig. 3 großenteils hinter einem Bauteil 44 verborgen. Ein zentraler Ring 45 des Bauteils 44 umgibt exzentrisch einen Achszapfen 46, der drehfest mit dem antriebsseitigen Zahnrad 34 verbunden ist. Unmittelbar benachbart zum antriebsseitigen Zahnrad 34 ist in der Öffnung des Rings 46 ein Ritzel 47 zu erkennen, das mit einem Zahnkranz 48 an der Innenfläche des Rings 45 kämmt und so das Bauteil 44 mit einem ganzzahligen Bruchteil, vorzugsweise der Hälfte, der Drehzahl des Zahnrads 34 in Drehung versetzt.

Der Ring 45 trägt axial gegeneinander versetzt zwei sich radial und jeweils etwa über die Hälfte seines Umfangs erstreckende Platten 49, 50.

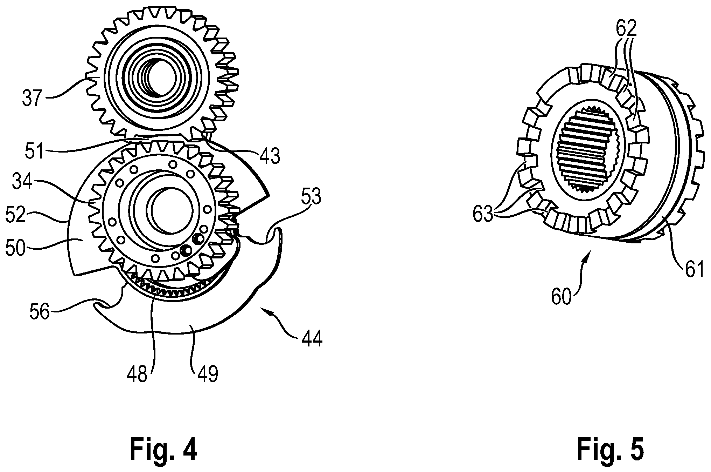

Deren Funktion wird verständlich anhand von Fig. 4, die die Zahnräder 34 37 und das Bauteil 44 aus zu Fig. 3 entgegengesetzter Richtung, von der Seite der Antriebswelle 32 her, zeigt. Hier ist die eine Lücke in der Verzahnung des Zahnrads 37, mit 51 bezeichnet, zu sehen, die es dem antriebsseitigen Zahnrad 34 erlaubt, frei zu rotieren, ohne dabei das abtriebsseitige Zahnrad 37 mitzunehmen. Indem die (in Fig. 4 weitgehend vom Zahnrad 37 verdeckte) konkave Außenkontur 43 einem kreisbogenförmigen Rand 52 der Platte 50 mit geringem Abstand gegenüberliegt, ist das Zahnrad 37 an jeder Drehung gehindert, die seine Verzahnung mit der des Zahnrades 34 in Eingriff bringen könnte.

Das Bauteil 44 ist, wie erwähnt, über seinen Zahnkranz 48 vom antriebsseitigen Zahnrad 34 drehangetrieben. In der Ansicht der Fig. 4 ist die Drehrichtung des Bauteils 44 im Gegenuhrzeigersinn. Eine in Drehrichtung vordere Kante der Platte 49 fungiert daher als ein Bewegeranschlag 53, der wie in Fig. 3 gezeigt im Laufe einer Umdrehung des Bauteils 44 gegen einen komplementären Bewegeranschlag 54 am Nocken 42 stößt. Da zu dem Zeitpunkt, wo dies geschieht, die Blockade der Drehung durch die Überlappung der konkaven Außenkontur 43 mit dem Rand 52 aufgehoben ist, setzt der Kontakt der Bewegeranschläge 53, 54 eine Drehung des Zahnrads 37 in Gang. Dadurch kommen die Verzahnungen der Zahnräder 34, 37 in Eingriff, so dass im Laufe einer Umdrehung des Zahnrades 34 auch das Zahnrad 37 eine Umdrehung um die Achse 31 ausführt, bis wieder die Lücke 51 dem Zahnrad 34 zugewandt ist.

Wenn dies geschieht, trifft ein Stopperanschlag 55 des Nockens 42 auf einen komplementären Stopperanschlag 56 an einer in Drehrichtung hinteren Kante der Platte 49 und verhindert so ein Voreilen des Zahnrads 37, der zu einer Wiederherstellung des Kraftschlusses zwischen den Zahnrädern 34, 37 führen könnte, bis wieder die konkave Außenkontur 43 und der Rand 52 weit genug überlappen, um eine Drehung des Zahnrads 37 zu blockieren.

Um jeweils beim Lösen und Wiederherstellen der Blockade gleichmäßige, reibungsarme Bewegungen zu ermöglichen, können insbesondere die Anschläge 54, 55 des Nockens 42 wie in Fig.3 gezeigt als Rollen ausgeführt sein.

Solange die Klauenkupplung 38 wie in Fig. 3 dargestellt, offen ist, wechseln sich zwar Umdrehungen des antriebsseitigen Zahnrades 34, bei denen das abtriebsseitige Zahnrad 37 in Ruhe bleibt, und solche, bei denen es mitrotiert, in einem durch das Übersetzungsverhältnis zwischen dem Zahnrad 34 und dem Bauteil 44 und die Ausdehnung von dessen Scheiben 49, 50 in Umfangsrichtung vorgegebenen Zahlenverhältnis ab, aber der Kurbelarm 30 wird nicht angetrieben. Stattdessen ist er durch eine zweite Klauenkupplung 57, in Fig. 3 großenteils hinter einem Befestigungsflansch 58 verdeckt, in der gezeigten Orientierung fixiert. Auf diese Weise ist sichergestellt, dass sich, solange keine Füllhubbewegung ausgeführt wird, der Arm 28 immer in der für eine korrekte Sammelhubbewegung nötigen Stellung befindet.

Um eine Füllhubbewegung in Gang zu setzen, genügt es, eine Schaltgabel 59 entlang der Achse 31 zu verschieben. In dem diese in eine Nut 61 eines Gleiters 60 eingreift, in dem der bewegliche Backen 41 der Klauenkupplung 38 und ein beweglicher Backen der Klauenkupplung 57 fest verbunden sind, kann sie in einer einzigen Schaltbewegung die Kupplung 38 schließen und die Kupplung 57 öffnen.

Um sicherzustellen, dass der Kurbelarm 30 während der Füllhubbewegung korrekt mit dem Kurbelarm 24 synchronisiert ist und er nach der Sammelhubbewegung wieder exakt dieselbe Stellung einnimmt wie davor, können die Klauen beider Kupplungen so geformt sein, dass sie jeweils nur in einer Orientierung der Kupplungsbacken relativ zueinander ein Ineinandergreifen der Klauen zulassen.

Fig. 5 zeigt eine dafür ausgelegte Ausgestaltung des Gleiters 60. Der dem Betrachter zugewandte Kupplungsbacken kann der bewegliche Backen 41 der Klauenkupplung 38 als auch der Klauenkupplung 57 sein. Eine Vielzahl von Klauen 62 von gleicher Gestalt ist in Umfangsrichtung gleichmäßig über eine Stirnseite des Gleiters 60 verteilt und würde an sich, in fachüblicher Weise, in genauso viel verschiedenen Orientierungen zwischen die Klauen des jeweils komplementären Backens eingreifen können, wie Klauen 62 vorhanden sind. Indem jedoch hier einer der Klauenzwischenräume 63 ausgefüllt und am komplementären Backen eine Klaue weggelassen ist, reduziert sich die Zahl der Orientierungen, in denen die Kupplung geschlossen werden kann, auf eine.

### Bezugszeichen

- 1: Traktor
- 2: Kolbenpresse
- 3: Verteilergetriebe
- 4: Zapfwelle
- 5: Pickup
- 6: Raffer
- 7: Presskanal
- 8: Presskolben
- 9: Knotermechanismus
- 10: Walze
- 11: Erntegut
- 12: Zuführkanal
- 13: Raffergetriebe
- 14: Einlassende
- 15: Auslassende
- 16: Wand
- 17: Wand
- 18: Schlitz
- 19: Spitze
- 20: Hebel
- 21: erstes Ende
- 22: zweites Ende
- 23: Angelpunkt
- 24: erster Kurbelarm
- 25: Achse
- 26: Stange
- 27: Achse
- 28: Arm
- 29: Stange
- 30: zweiter Kurbelarm
- 31: Achse
- 32: Antriebswelle
- 33: Planetengetriebe
- 34: antriebsseitiges Zahnrad
- 35: Zwischenrad
- 36: erstes abtriebsseitiges Zahnrad
- 37: zweites abtriebsseitiges Zahnrad
- 38: Klauenkupplung
- 39: Klauen
- 40: Backen
- 41: Backen
- 42: Nocken
- 43: konkave Außenkontur
- 44: Bauteil
- 45: Ring
- 46: Achszapfen
- 47: Ritzel
- 48: Zahnkranz
- 49: Platte
- 50: Platte
- 51: Lücke
- 52: Rand
- 53: Bewegeranschlag
- 54: Bewegeranschlag
- 55: Stopperanschlag
- 56: Stopperanschlag
- 57: Klauenkupplung
- 58: Befestigungsflansch
- 59: Schaltgabel
- 60: Gleiter
- 61: Nut
- 62: Klaue
- 63: Klauenzwischenraum

## Patentansprüche

1. Kolbenpresse (2), welche einen in einem Presskanal (7) zwischen Endlagen beweglich angeordneten Presskolben (8), einen Zuführkanal (12), ein Raffergetriebe (13) und einen Raffer (6) umfasst, welcher, über einen ersten Getriebeausgang (24) des Raffergetriebes (13) angetrieben in dem Zuführkanal (12) bewegbar ist, um in einem ersten Betriebsmodus eine Sammelhubbewegung, die Erntegut in dem Zuführkanal (12) komprimiert, und in einem zweiten Betriebsmodus eine Füllhubbewegung, die das Erntegut aus dem Zuführkanal (12) in den Presskanal (7) verlagert, auszuführen, **dadurch gekennzeichnet, dass** das Raffergetriebe (13) einen zweiten Getriebeausgang (30) aufweist und umschaltbar ist, um in einem der Betriebszustände nur den ersten Ausgang (24) anzutreiben, und in einem anderen der Betriebszustände Antriebsleistung auf beide Ausgänge (24, 30) zu verteilen.

2. Kolbenpresse (2) nach Anspruch 1, bei der der eine Betriebszustand der erste und der andere Betriebszustand der zweite Betriebszustand ist.

3. Kolbenpresse nach Anspruch 1 oder 2, bei der der zweite Ausgang (30) in dem einen Betriebszustand von einer Antriebswelle (32) des Raffergetriebes (13) entkoppelt ist.

4. Kolbenpresse nach einem der vorhergehenden Ansprüche, **dadurch gekennzeichnet, dass** das Raffergetriebe (13) ein Zahnradpaar mit einem antriebsseitigen (34) und einem abtriebsseitigen Zahnrad (37) umfasst, die zum Antreiben des zweiten Ausgangs (30) zusammenwirken, wobei eine Verzahnung des abtriebsseitigen Zahnrads (37) auf einem Teil von dessen Umfang eine Lücke (51) aufweist, durch den sich die Zähne des antriebsseitigen Zahnrads (34) in wenigstens einer ersten Phase des einen Betriebszustands, in der sich das abtriebsseitige Zahnrad (37) in einer Ruhestellung befindet, ohne Formschluss hindurchbewegbar sind.

5. Kolbenpresse nach Anspruch 4, bei der eine an das antriebsseitige Zahnrad gekoppelte kreisbogenförmige Kontur (52) während der ersten Phase mit einer komplementär geformten, an das abtriebsseitige Zahnrad (37) gekoppelten konkaven Kontur (43) zusammenwirkt, um eine Drehung des abtriebsseitigen Zahnrads (37) aus der Ruhestellung heraus zu blockieren.

6. Kolbenpresse nach Anspruch 4 oder 5, bei der das antriebsseitige und das abtriebsseitige Zahnrad (34, 37) jeweils mit einem Bewegeranschlag (53, 54) rotatorisch gekoppelt sind, und das abtriebsseitige Zahnrad (37) durch Aneinanderstoßen der Bewegeranschläge (53, 54) aus der Ruhestellung in eine Stellung drehbar ist, in der die Zähne des antriebsseitigen Zahnrads (34) in die Verzahnung des abtriebsseitigen Zahnrads (37) eingreifen.

7. Kolbenpresse nach Anspruch 6, bei der das antriebsseitige und das abtriebsseitige Zahnrad (34, 37) jeweils mit einem Stopperanschlag (55, 56) gekoppelt sind, und das abtriebsseitige Zahnrad (37) durch Aneinanderstoßen der Stopperanschläge (55, 56) in einer Stellung stoppbar ist, in der die Zähne des antriebsseitigen Zahnrads (34) in die Lücke (51) des abtriebsseitigen Zahnrads (37) eingreifen.

8. Kolbenpresse nach Anspruch 6 oder 7, bei der der Bewegeranschlag (54) des antriebsseitigen Zahnrads (34) an das antriebsseitige Zahnrad (34) über ein Untersetzungsgetriebe gekoppelt ist, wobei optional das Untersetzungsgetriebe einen Ring (45) umfasst, und eine Innenfläche des exzentrisch zu einer Achse des antriebsseitigen Zahnrads (34) angeordneten Rings (45) mit einer an das antriebsseitige Zahnrad (34) gekoppelten und um die Achse zentrierten Außenfläche in Kontakt steht, wobei optional die Innenfläche einen Zahnkranz (48) und die Außenfläche ein Ritzel (47) umfasst.

9. Kolbenpresse nach einem der Ansprüche 4 bis 8, ferner mit einer Kupplung, durch die der zweite Getriebeausgang (30) in wenigstens einer zweiten Phase des einen Betriebszustands von dem abtriebsseitigen Zahnrad (37) entkoppelt ist, wobei optional die Kupplung eine Klauenkupplung (38) ist, und ferner optional Klauen (62) von zwei Backen der Klauenkupplung (38) nur in einer einzigen Orientierung zueinander in Eingriff bringbar sind.

10. Kolbenpresse nach einem der vorhergehenden Ansprüche, bei der der Raffer (6) durch einen Hebel (20) angetrieben ist, der an einem ersten Ende (21) den Raffer (6) trägt, der an einem zweiten Ende (22) an den zweiten Getriebeausgang (30) und an einem zentralen Punkt (23) zwischen dem ersten und dem zweiten Ende (21, 23) an den ersten Getriebeausgang (24) gekoppelt ist.
